# FASCICULE DE BREVET EUROPEEN

(11) **EP 1 862 498 B1**
(45) Date de publication et mention de la délivrance du brevet: **14.01.2009**
(21) Numéro de dépôt: 07354009.8
(22) Date de dépôt: 27.02.2007
(51) Int. Cl.: C08J 5/10, B29C 45/00

(54) **Composition pour moulage par injection, piece produite à partir de la composition et procédé de production de la composition**
Zusammensetzung für den Spritzguss, aus der Zusammensetzung hergestelltes Teil und Verfahren zur Produktion der Zusammensetzung
Composition for injection moulding, part produced using the composition and method of producing the composition

(30) Priorité: 30.05.2006 FR 0604814
(43) Date de publication de la demande: 05.12.2007
(73) Titulaire: SCHNEIDER ELECTRIC INDUSTRIES SAS, 92500 Rueil-Malmaison (FR)
(72) Inventeur: Ohl, Brigitte, 38050 Grenoble Cedex 09 (FR); Aymami, Joan, 38050 Grenoble Cedex 09 (FR)
(74) Mandataire: Tripodi, Paul

(56) Documents cités:
- EP-A- 0 570 632
- WO-A-01/96085
- FR-A- 2 728 908
- FR-A- 2 772 037
- FR-A- 2 822 208

## Description

### DOMAINE TECHNIQUE DE L'INVENTION

L'invention concerne une composition composite pour moulage par injection selon la revendication 1 et comprenant :
- de 15 à 50 % en poids d'une matrice organique comportant une résine thermodurcissable,
- des fibres de renfort, et
- des particules solides comportant des particules minérales ignifugeantes.

L'invention concerne également un procédé de production de 100 parties en poids d'une composition pour moulage par injection selon la revendication 15 et comprenant :
- la préparation d'au moins une partie d'une matrice organique par mélange de composés comportant une résine thermodurcissable,
- l'ajout et le mélange de fibres renfort, et
- l'ajout et le mélange de particules solides comportant des particules minérales ignifugeantes.

L'invention concerne enfin une pièce obtenue par moulage par injection de la composition composite décrite précédemment.

### ETAT DE LA TECHNIQUE

Les compositions thermodurcissables utilisées pour le moulage par injection de pièces de relativement petites dimensions, notamment des boîtiers pour des équipements électriques, par exemple des disjoncteurs, sont généralement du type composite.

Il est connu d'utiliser, pour le moulage par injection, des compositions composites comportant une matrice organique, des fibres de renfort et des particules minérales ignifugeantes.

La demande française de certificat d'utilité N° 2 728 908 décrit des éléments de construction très résistants aux flamme constitués essentiellement d'une résine polyester insaturée, durcie, renforcée par des fibres de verre et avec une charge de trihydrate d'oxyde d'aluminium.

Lors de la mise en oeuvre de ce type de composition pour le moulage par injection de pièces de relativement petites dimensions, la répartition des fibres de renfort dans ces pièces est généralement peu homogène. De surcroît, l'orientation des fibres de renfort dans ces pièces est généralement peu isotrope.

### EXPOSE DE L'INVENTION

L'invention vise une composition permettant de remédier aux inconvénients de l'art antérieur.

Une composition composite selon l'invention comprends:
- de 15 à 50 % en poids d'une matrice organique comportant une résine thermodurcissable,
- des fibres de renfort, et
- des particules solides comportant des particules minérales ignifugeantes,
dans laquelle la quantité de fibres de renfort est comprise entre 5 et 15 % en poids de ladite composition, dans laquelle au moins une portion des particules solides supérieure à 5 % en poids de ladite composition comporte des billes, et dans laquelle au moins 50 % en poids des particules minérales ignifugeantes présentent une distribution des diamètres équivalents comprenant au moins deux modes.

De préférence, les billes ont un facteur de forme inférieur à 2. Avantageusement, les billes ont une forme sensiblement sphérique. De préférence, les billes sont en verre

Selon un mode préféré de l'invention, une fibre de renfort comporte une pluralité de filaments.

De préférence, les billes ont un diamètre compris entre 0,3 et 5 fois le diamètre moyen des filaments.

Selon un mode de réalisation, au moins 90 % en poids des particules solides présentent un diamètre équivalent compris entre 0,05 et 5 fois le diamètre moyen des filaments des fibres de renfort. De préférence, la coupe granulométrique correspondant à la séparation de 50 % en poids des particules solides est comprise en 0,2 et 2,0 fois le diamètre moyen des filaments des fibres de renfort. Avantageusement, au moins 50 % en poids des particules solides présentent une distribution des diamètres équivalents comprenant au moins trois modes.

Selon un autre mode de réalisation, au moins 90 % en poids des particules minérales ignifugeantes présentent un diamètre équivalent moyen compris entre 0,05 et 5 fois le diamètre moyen des filaments des fibres de renfort. De préférence, la coupe granulométrique correspondant à la séparation de 50 % en poids des particules minérales ignifugeantes est comprise en 0,1 et 2,0 fois le diamètre moyen des filaments des fibres de renfort.

De préférence, les particules minérales ignifugeantes sont essentiellement constituées par des alumines hydratées.

De préférence, les particules minérales ignifugeantes ont des formes différentes.

De préférence, la matrice organique comporte un additif thermoplastique.

L'invention concerne également un procédé de production de 100 parties en poids d'une composition pour moulage par injection comprenant:
- la préparation d'au moins une partie d'une matrice organique, par mélange de composés comportant une résine thermodurcissable,
- l'ajout et le mélange de fibres renfort, et
- l'ajout et le mélange de particules solides comportant des particules minérales ignifugeantes,
dans lequel la quantité de fibres de renfort ajoutées et mélangées est comprise entre 5 et 15 parties en poids de ladite composition, dans lequel une portion des particules solides ajoutées et mélangées comporte au moins 5 parties en poids de billes, et dans lequel au moins 50 % en poids des particules minérales ignifugeantes présentent une distribution des diamètres équivalents comprenant au moins deux modes.

De préférence, l'ajout et le mélange des billes et des fibres de renfort sont réalisés sensiblement en même temps.

De préférence, une autre partie de la matrice organique comportant un agent d'ensimage est ajoutée sensiblement conjointement aux particules minérales ignifugeantes.

Avantageusement, l'ajout et le mélange des billes sont réalisés en maintenant la température de la composition à une valeur sensiblement constante.

L'invention concerne également une pièce obtenue par moulage par injection d'une composition, ladite composition étant une composition composite telle que décrite précédemment, la forme de la pièce étant définie par la forme du moule dans lequel ladite composition est injectée.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente, à titre d'exemple, une distribution des diamètres équivalents des particules minérales ignifugeantes de la composition composite selon l'invention.

La figure 2 représente schématiquement des particules minérales ignifugeantes ayant des formes différentes dans une composition moulée par injection.

La figure 3 représente schématiquement un exemple de procédé de fabrication d'une composition composite conforme à l'invention.

### DESCRIPTION DETAILLEE DES MODES PREFERES DE L'INVENTION

La matrice organique MO de la composition composite peut comporter de 65 à 80 % en poids, de préférence de 72 à 78 % en poids d'une matrice thermodurcissable TDG. On entend par matrice thermodurcissable, une matière à base de polymère, à partir de laquelle une pièce peut être réalisée par mise en oeuvre à chaud, cette matière étant le siège de réactions chimiques irréversibles au terme desquelles la forme définitive est établie. La matrice thermodurcissable TDG peut être à base de composés macromoléculaires tridimensionnels obtenus par transformation chimique, ces composés pouvant être thermiquement durcis ou rigidifiés. A titre d'exemples, les composés macromoléculaires de la matrice thermodurcissable TDG peuvent comporter ou être essentiellement constitués par des polyuréthanes, des époxydes, des polyesters insaturés, des vinylesters, et/ou des phénoliques. Les composés macromoléculaires de la matrice thermodurcissable TDG peuvent également être des solutions de type hybrides combinant des composés de natures chimiques différentes. Parmi les polyesters insaturés, il est possible d'utiliser des résines orthophtaliques, maléiques, maléophtaliques, isophtaliques, vinylester, dicyclopentadiène.

De préférence, la matrice thermodurcissable est de type générique, c'est à dire que les réactions chimiques liées à la mise en oeuvre de cette matière sont de type connu, notamment des réactions de copolymérisation radicalaire d'un monomère, en général le styrène, avec les doubles liaisons d'un prépolymère. Le prépolymère peut être préparé lors d'une étape initiale par polyestérification. Dans le cas où les composés macromoléculaires de la matrice thermodurcissable TDG seraient des polyesters insaturés, ces derniers sont généralement en solution dans du styrène agissant au moment de la copolymérisation comme agent de réticulation. Dans le cas de la copolymérisation radicalaire du styrène avec le prépolymère, il est obtenu un composé ayant une structure tridimensionnelle de chaînes de polyesters liées par des petites chaînes polystyrène.

La matrice organique MO de la composition composite peut comporter de 3 à 25 % en poids, de préférence de 5 à 15 % en poids d'un additif thermoplastique TPS. Généralement, l'additif thermoplastique TPS agit en synergie avec la résine thermodurcissable de manière à réduire le retrait intrinsèque provoqué par la polymérisation du réseau thermodurcissable lors de la réticulation. Les additifs thermoplastiques TPS peuvent être choisis parmi le polystyrène, le polyéthylène, l'acétate de polyvinyle, le polyacrylate, le polyméthyl méthacrylate, et/ou les polyesters thermoplastiques

De préférence, l'additif thermoplastique TPS est du type spécifique, c'est à dire qu'il permet la mise en oeuvre de réactions chimiques spécifiques adaptées pour limiter le retrait intrinsèque induit par les réactions de réticulation de la matrice thermodurcissable TDG.

La matrice organique MO de la composition composite peut comporter de 0,005 à 0,2 % en poids, de préférence de 0,005 à 0,15 % en poids d'un additif amorceur AA. Généralement, l'additif amorceur AA permet d'initier les réactions chimiques, notamment les réactions de réticulation, de la matrice thermodurcissable TDG. L'additif amorceur AA peut agir en se décomposant et en produisant des radicaux libres à des températures données. Cette production de radicaux libres est généralement réalisée par un mécanisme radicalaire, la réaction de réticulation se propageant ensuite d'elle-même. L'additif amorceur AA peut être tout type d'additif amorceur connu de l'homme du métier, tel que des hydroperoxydes d'alkyle, des peroxydes de dialkyle, des peresters, des peroxydes de diacyle, et/ou des peroxydes dérivés de cétones. Par exemple, l'additif amorceur AA peut être le perbenzoate de tertiobutyle, l'hydroperoxyde de tertiobutyle, l'hydroperoxyde de cumène, le peroxyde de ditertiobutyle et/ou leperoxyde de dicumyle.

La matrice organique MO de la composition composite peut également comporter de 0,0001 à 0,01 % en poids, de préférence de 0,0001 à 0,002 % en poids d'un additif inhibiteur retardateur de réticulation SAI. Cet additif peut comporter un ou plusieurs additifs dont le rôle est d'inhiber les réactions de réticulation de la matrice thermodurcissable TDG. Cet additif peut être tout type d'additif inhibiteur connu de l'homme du métier, c'est à dire tout additif permettant d'accroître la durée de conservation des pièces moulées par injection à partir de la composition de l'invention. Cet additif peut être également tout additif rendant les pièces moulées par injection compatibles avec une utilisation industrielle. L'additif inhibiteur SAI permet généralement de retarder, pendant un laps de temps donné, le démarrage des réactions de réticulation de la matrice thermodurcissable TDG. Au-delà de ce laps de temps, la cinétique des réactions de réticulation redevient normale.

L'additif inhibiteur SAI peut être choisi parmi les composés suivants utilisés seuls ou mélange: hydroquinone, monotertiobutylhydroquinone, toluhydroquinone, ditertiobutyl-2,5-hydroquinone, benzoquinone, quinhydrone, parabenzoquinone, paratertiobutylcatéchol, ditertiobutyl-2,6-paracrésol.

La matrice organique MO de la composition composite peut également comporter de 0,01 à 0,2 % en poids, de préférence de 0,02 à 0,1 % en poids d'un agent de démoulage AD. L'agent de démoulage AD permet généralement de démouler plus facilement une pièce en limitant son adhérence aux parois du moule. L'agent de démoulage AD permet ainsi d'améliorer l'état de surface de la pièce moulé par injection. L'agent de démoulage peut comporter un acide stéarique, et/ou des sels d'acide stéarique. En particulier, l'agent de démoulage AD peut comporter le stéarate de calcium, le stéarate de zinc et/ou le stéarate de magnésium.

La composition composite comporte de 15 à 50 % en poids de la matrice organique. De préférence, la composition composite comporte de 26 à 40 % en poids de la matrice organique.

En plus de la matrice organique MO, la composition composite comporte de 5 à 15 % en poids, de préférence de 7 à 14 % en poids de fibres de renfort RF. Généralement, une fibre de renfort comporte une pluralité de filaments. Les fibres et les filaments peuvent présenter une longueur moyenne comprise entre 3 et 50 mm, de préférence comprise entre 3 et 25 mm. Le diamètre moyen des filaments peut être compris entre 1 et 50 µm, de préférence compris entre 5 et 25 µm. Les fibres sont généralement mélangées à la matrice organique, ce qui a pour effet de réduire leur longueur et de les lier intimement à l'ensemble des composés de la composition. Ainsi, la composition composite obtenue est homogénéisée.

Les fibres de renforts RF peuvent être n'importe quelles fibres connues de l'homme de métier, se présentant, par exemple, sous forme de fils coupés. Différents types de matériaux peuvent être utilisés tels que, par exemple, des fibres de carbone, des fibres de polyéthylène téréphtalate aramide@, des fibres naturelles de provenance végétale ou minérale, des fibres de verre de différents types en particulier de type E ou encore de type S2.

En plus de la matrice organique MO et des fibres de renfort RF, la composition composite peut comporter de 20 à 70 % en poids, de préférence de 40 à 60 % en poids de particules solides.

Les particules solides peuvent comporter de 50à 90 % en poids, de préférence de 70 à 90 % en poids de particules minérales ignifugeantes CMP. Ces particules ignifugeantes CMP permettent notamment d'améliorer le comportement au feu des pièces moulées obtenues à partir de la composition composite. Les particules ignifugeantes sont généralement des particules minérales hydratées à l'état naturel. De préférence, les particules ignifugeantes comportent essentiellement des alumines hydratées, par exemple tri-hydratées. Ces dernières permettent généralement de libérer spontanément une importante quantité d'eau, lorsque la température atteint 280 à 300°C.

Selon un aspect de l'invention, au moins une portion des particules solides est constituée par des billes CMSE, la quantité massique de ces billes étant supérieure à 5 % en poids de la composition composite. De préférence, la composition composite comporte de 5 à 15 % en poids de billes CMSE. Avantageusement, la quantité massique de billes CMSE est comprise entre 0,25 et 1,2 fois la quantité massique de fibres de renfort (RF). Généralement, les billes CMSE sont fabriquées à partir d'un matériau minéral dont la pureté et la nature sont compatibles avec les autres composés de la composition composite. De préférence, les billes CMSE sont en verre. Les billes CMSE peuvent présenter une surface traitée de manière à leur conférer des propriétés inter faciales appropriées.

De préférence, les billes CMSE ont un facteur de forme inférieur à 2. Avantageusement, le facteur de forme est inférieur à 1,3, voire sensiblement égal à 1. Le facteur de forme peut être déterminé par la mesure du rapport de la longueur moyenne sur le diamètre moyen apparent. La mesure du facteur de forme peut être réalisée par visualisation sur un microscope électronique à balayage. En l'occurrence, le facteur de forme est déterminé par analyse d'images.

De préférence, les billes CMSE ont un diamètre compris entre 3 et 100 µm. Avantageusement, les billes CMSE peuvent également avoir un diamètre compris entre 0,3 et 5 fois le diamètre moyen des filaments des fibres de renfort.

L'utilisation de billes CMSE permet notamment de limiter la formation d'agrégats et d'accroître la fluidité et l'homogénéité de la composition composite lors de sa mise en oeuvre. De ce fait, le comportement rhéologique de cette composition s'en trouve amélioré. Ceci se traduit par une moindre pression et une moindre abrasion dans les appareils d'injection et de moulage, et cela favorise l'écoulement de la composition composite dans ces appareils. La forme non anguleuse de ces billes contribue à l'amélioration de la répartition des efforts au sein de la pièce moulée, ce qui permet d'obtenir des champs de contrainte mécanique et électrique plus homogènes. Ainsi, la durabilité mécanique et diélectrique de la pièce moulée s'en trouve accrue et la tenue aux chocs est améliorée. De même, l'usure des moules est minorée, ce qui se traduit par une réduction des coûts de production. Par ailleurs, la rhéologie de la composition est améliorée et reproductible, ce qui accroît grandement la tenue aux contraintes mécaniques, tout en préservant la tenue au feu.

La granulométrie des particules solides de la composition a un impact sur les propriétés des pièces fabriquées à partir d'une telle composition, notamment sur la tenue mécanique et diélectrique de ces pièces. Cette granulométrie peut être déterminée soit par rapport aux particules minérales ignifugeantes CMP, soit par rapport à l'ensemble des particules solides de la composition, c'est à dire un ensemble incluant les particules minérales ignifugeantes CMP et les billes CMSE . La granulométrie de ces particules peut être déterminée statistiquement à partir de la distribution du diamètre équivalent de ces particules. La mesure de la granulométrie peut être réalisée par tout moyen connu de l'homme du métier, par exemple par diffraction laser. A partir de la distribution de diamètre équivalent des particules, il est possible de déterminer les grandeurs granulométriques suivantes :
- Une plage de diamètres équivalents dans laquelle ont retrouve une majorité, par exemple au moins 90 % en poids, des particules.
- Une coupe granulométrique correspondant à la taille maximale des mailles d'un tamis permettant de séparer fictivement une portion donnée de particules, par exemple la coupe d50 correspond au diamètre équivalent permettant de séparer 50 % en poids des particules.
- Le nombre de modes correspondant au nombre de pics de la distribution de diamètre équivalent des particules, chaque pic étant associé à une quantité donnée de particules.

Avantageusement, au moins 90 % en poids de l'ensemble des particules solides présentent un diamètre équivalent moyen compris entre 0,05 et 5 fois le diamètre moyen des filaments des fibres de renfort et/ou au moins 90 % en poids des particules minérales ignifugeantes CMP présentent un diamètre équivalent moyen compris entre 0,05 et 5 fois le diamètre moyen des filaments des fibres de renfort.

Avantageusement la coupe granulométrique d50 correspondant à la séparation de 50 % en poids des particules est :
- sur l'ensemble des particules solides, comprise entre 0,2 et 2,0 fois le diamètre moyen des filaments des fibres de renfort, et/ou
- sur seulement les particules minérales ignifugeantes CMP, comprise en 0,1 et 2,0 fois le diamètre moyen des filaments des fibres de renfort.

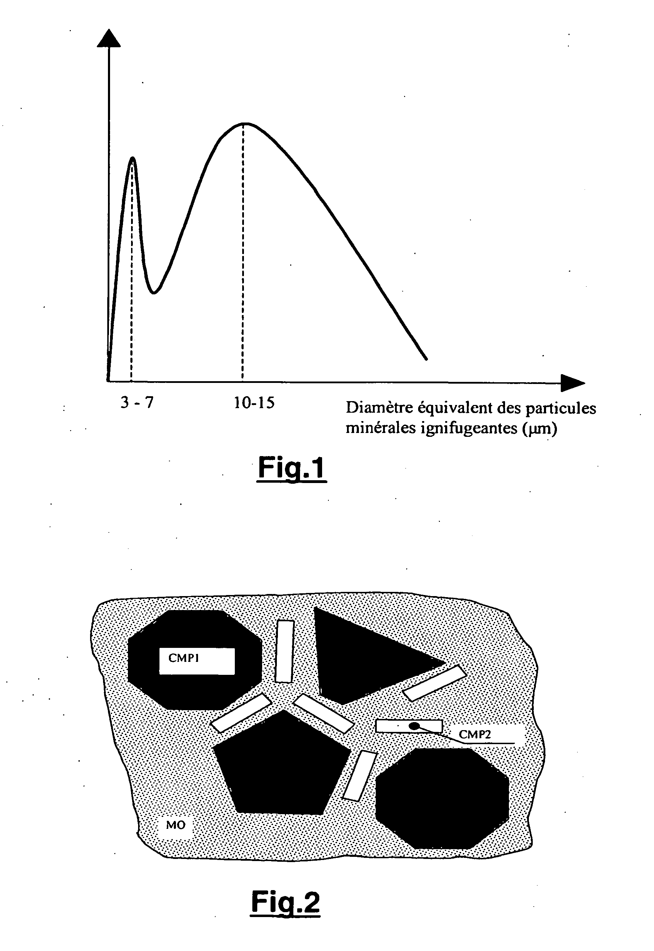

Selon un aspect de l'invention, la distribution des particules minérales ignifugeantes CMP est multimodale, par exemple bimodale, comme cela est représenté à la figure 1. De préférence, au moins 50 % en poids de l'ensemble des particules solides présentent une distribution des diamètres équivalents comprenant au moins trois modes, et/ou au moins 50 % en poids des particules minérales ignifugeantes CMP présentent une distribution des diamètres équivalents comprenant au moins deux modes. La présence de plusieurs modes permet notamment d'augmenter la compacité des particules et d'améliorer la tenue diélectrique et mécanique de la composition composite.

De préférence, les particules solides, et notamment les particules minérales ignifugeantes CMP, ont des formes différentes. Les formes de ces particules peuvent être choisies de façon à augmenter la compacité de ces particules et à limiter le nombre et/ou la taille des cavités dans la composition moulée par injection. Ceci permet notamment d'améliorer la tenue diélectrique et mécanique des pièces moulées par injection de la composition composite. La forme des particules peut être caractérisée par un facteur de forme ou par une densité apparente, c'est à dire par une méthode de pesée d'un volume donné de poudre après tassement. En l'occurrence, la forme des particules solides ignifugeantes CMP a été déterminée par mesure de la densité apparente. La densité apparente dépend généralement de la manière selon laquelle les particules sont compactées. En les secouant, les particules les plus fines s'insèrent dans les espaces vides entre les particules les plus grosses. La densité apparente peut être une densité apparente tapée mesurée conformément à la norme ASTM B527.

Dans l'exemple de la figure 1, environ 20 à 40 % en poids des particules minérales ignifugeantes CMP présentent un diamètre équivalent situé entre 3 et 7 µm CMP2 et environ 60 à 80 % en poids des particules minérales ignifugeantes présentent un diamètre équivalent situé entre 10 et 15 µm CMP1. Les particules solides ignifugeantes CMP1 et CMP2 sont également représentées à la figure 2. Les particules CMP2 présentent une densité apparente d'environ 150 à 250 kg/m3. Ces particules CMP2 ont tendance à s'intercaler entre les particules CMP1, qui présentent une densité apparente d'environ 650 à 800 kg/m3. La forme bimodale de la distribution des diamètres équivalents et la différence de forme entre les particules solides ignifugeantes CMP 1 et CMP2 confèrent, à la composition moulée par injection, des propriétés mécaniques et diélectriques améliorées.

Les particules solides, et notamment les particules minérales ignifugeantes CMP2, ont de préférence, une surface spécifique comprise entre 6 et 8 m²/g. La surface spécifique représente généralement la surface totale par unité de masse des particules qui est accessible aux atomes et aux molécules. La méthode de mesure est basée sur un procédé utilisant l'absorption physique de gaz à basse température et se réfère aux travaux de Brunaeur, Emmett et Teller. La surface spécifique est également appelée surface BET ou surface spécifique BET. De préférence, la méthode de mesure référencée ISO9277 : 1995 est utilisée.

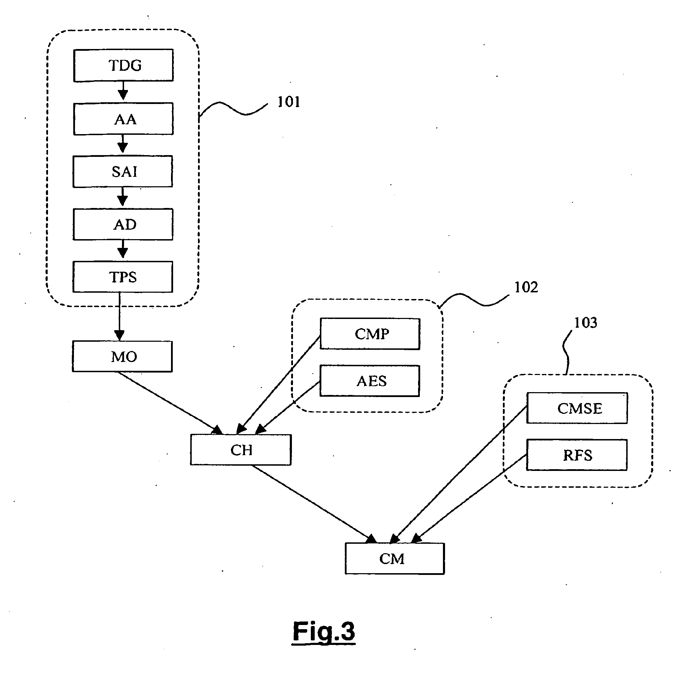

Comme cela est représenté à la figure 3, le procédé de préparation de 100 parties en poids d'une composition composite peut, à titre d'exemple, comporter les étapes suivantes :
- une étape de préparation 101 d'une première partie MO1 d'une matrice organique MO, par mélange de composés comportant une matrice thermodurcissable TDG, un additif thermoplastique TPS, un additif amorceur AA, un additif inhibiteur SAI, et un agent de démoulage AD,
- une étape d'ajout et de mélange, à la première partie MO1 de la matrice organique MO, d'une seconde partie MO2 de la matrice organique WO essentiellement constituée par un agent d'ensimage AES conjointement avec des particules minérales ignifugeantes CMP, pour obtenir un mélange complexe homogénéisé CH, et
- une étape d'ajout et de mélange au mélange complexe homogénéisé d'au moins 5 parties en poids de billes CMSE et de 5 à 15 parties en poids de fibres de renfort RF, pour obtenir une composition composite CMH selon l'invention comportant de 15 à 50 parties en poids de la matrice organique.

L'ajout de l'agent d'ensimage AES conjointement avec les particules minérales ignifugeantes permet notamment de créer des forces physico-chimiques entre les particules et la matrice pour optimiser le couplage de ces particules avec la matrice.

L'agent d'ensimage spécifique AES peut être ajouté soit à l'état pur, soit en mélange. De préférence, la quantité d'agent d'ensimage spécifique AES ajoutée peut être comprise entre 0,005 et 0,02 fois la quantité de particules minérales ignifugeantes CMP. L'agent d'ensimage spécifique AES peut être tout type d'agent d'ensimage connu de l'homme du métier, permettant d'améliorer l'adhésion entre les composés du mélange. L'agent d'ensimage spécifique AES peut comporter un ou plusieurs silanes, par exemple ceux comportant des groupements fonctionnels de type méthacrylate, époxy, amine, vinyl, uréide, triméthoxyde. De préférence, l'agent d'ensimage spécifique AES est de la famille des silanes organo-fonctionnels. La présence d'un agent d'ensimage spécifique AES dans la composition comportant des particules minérales ignifugeantes CMP peut permettre la fixation des molécules de silane à la surface desdites particules. De par leur nature, la présence de ces molécules permet de créer des liaisons avec la matrice organique, ce qui confère une meilleure tenue mécanique à la composition composite moulée par injection.

L'étape d'ajout et de mélange des billes CMSE et des fibres de renfort RF peut être réalisée en maintenant la température de la composition à une valeur sensiblement constante. L'ajout des billes CMSE et des fibres de renfort RF peut être progressif, par exemple, avec un débit constant de l'ordre de 1 kg par minute. Ceci permet de ne pas démarrer la réaction de réticulation de la matrice thermodurcissable TDG dans les appareils de mélange.

Le stockage de la composition peut être réalisé par n'importe quel moyen connu de l'homme du métier. 11 peut être réalisé dans un emballage fermé hermétiquement et respectant les durées de péremption habituelles ainsi que les températures recommandées, par exemple à 20°C +/- 3 °C.

### Exemples comparatifs :

Le tableau 1 ci-dessous présente deux exemples de compositions composites, l'un comparatif C1 et l'autre selon l'invention C2.

**Tableau 1**

| | C1 (comparatif) % poids | C2 (Invention) % poids |
|---|---|---|
| Résine orthophtalique (TDG) | 27,835 | 27,835 |
| Tertio butylperoxy-2-ethylhexanoate (AA) | 0,3 | 0,3 |
| Mélange de ionol et parabenzoquinone (SAI) | 0,045 | 0,045 |
| Stéarate métallique (AD) | 2 | 2 |
| Thermoplastique (TPS) | 7 | 7 |
| Alumine tri hydratée (CMP) (*) | 42,4 | 42,4 |
| Silane organo fonctionnels (AES) | 0,42 | 0,42 |
| Charge minérale sphérique ensimée (CMSE) | 0 | 5 à 10 |
| Fibre de verre (RF) | 20 | 10 à 15 |

| | | |
|---|---|---|
| (*) large distribution granulométrique pour C1 (diamètre équivalent des grains compris entre 1 et 80 µm), et distribution granulométrique bimodale spécifique pour C2 (cf. figure 1). | | |

Le tableau 2 ci-dessous présente les propriétés relatives des pièces moulées par injection obtenues à partir des compositions composites C1 et C2 présentées dans le tableau 1.

**Tableau 2**

| | Performance relative de C2 par rapport à C1 |
|---|---|
| Contrainte à rupture en flexion ISO 14125 | 1,5 |
| Résistance au choc Charpy ISO 179 | 1,3 |
| Energie élastique au choc multi axial ISO 6603-2 choc - 10 J | 2 |

Comparativement à la composition C1, la composition C2 apporte une nette amélioration de la résistance à la rupture en flexion ainsi que de la résistance au choc Charpy. L'amélioration de performance est encore plus significative en ce qui concerne l'absorption d'énergie en choc multi - axial. En effet, l'énergie absorbée est deux fois plus élevée pour la composition C2 comparativement à la composition C1.

Le moulage par injection de la composition peut être réalisé par n'importe quel moyen connu de l'homme du métier, par exemple à l'aide d'une presse industrielle ayant une capacité de 300 tonnes ou plus.

La composition selon l'invention confère aux pièces moulées par injection une tenue mécanique et une tenue électrique améliorées.

Le moulage par injection de la composition de l'invention permet d'obtenir des pièces avec une bonne reproductibilité et entraîne une moindre abrasion des moules.

La composition de l'invention permet de procéder au moulage par injection de pièces de relativement petites dimensions par tout moyen de moulage par injection connu de l'homme du métier, et notamment par des moyens généralement mis en oeuvre pour des compositions composite comportant plus de 15 % en poids de fibres de renfort tels que des fibres de verre.

## Revendications

1. Composition composite pour moulage par injection comprenant :
- de 15 à 50 % en poids d'une matrice organique (MO) comportant une résine thermodurcissable (TDG),
- des fibres de renfort (RF), et
- des particules solides (CMP, CMSE) comportant des particules minérales ignifugeantes (CMP),
**caractérisée en ce que** la quantité de fibres de renfort est comprise entre 5 et 15 % en poids de ladite composition, **en ce qu'**au moins une portion des particules solides supérieure à 5 % en poids de ladite composition comporte des billes (CMSE), et **en ce qu'**au moins 50 % en poids des particules minérales ignifugeantes (CMP) présentent une distribution des diamètres équivalents comprenant au moins deux modes.

2. Composition selon la revendication 1, **caractérisée en ce que** les billes (CMSE) ont un facteur de forme inférieur à 2.

3. Composition selon la revendication 2, **caractérisée en ce que** les billes (CMSE) ont une forme sensiblement sphérique.

4. Composition selon l'une des revendications 1 à 3, **caractérisée en ce que** les billes (CMSE) sont en verre

5. Composition selon l'une des revendications 1 à 4, **caractérisée en ce qu'**une fibre de renfort comporte une pluralité de filaments.

6. Composition selon la revendication 5, **caractérisée en ce que** les billes (CMSE) ont un diamètre compris entre 0,3 et 5 fois le diamètre moyen des filaments.

7. Composition selon l'une des revendications 5 ou 6, **caractérisée en ce qu'**au moins 90 % en poids des particules solides (CMP, CMSE) présentent un diamètre équivalent compris entre 0,05 et 5 fois le diamètre moyen des filaments des fibres de renfort.

8. Composition selon la revendication 7, **caractérisée en ce que** la coupe granulométrique (d50) correspondant à la séparation de 50 % en poids des particules solides (CMP, CMSE) est comprise en 0,2 et 2,0 fois le diamètre moyen des filaments des fibres de renfort.

9. Composition selon l'une des revendications 7 ou 8, **caractérisée en ce qu'**au moins 50 % en poids des particules solides (CMP, CMSE) présentent une distribution des diamètres équivalents comprenant au moins trois modes.

10. Composition selon l'une des revendications 5 ou 6, **caractérisée en ce qu'**au moins 90 % en poids des particules minérales ignifugeantes (CMP) présentent un diamètre équivalent moyen compris entre 0,05 et 5 fois le diamètre moyen des filaments des fibres de renfort.

11. Composition selon la revendication 8, **caractérisée en ce que** la coupe granulométrique (d50) correspondant à la séparation de 50 % en poids des particules minérales ignifugeantes (CMP) est comprise en 0,1 et 2,0 fois le diamètre moyen des filaments des fibres de renfort.

12. Composition selon l'une des revendications 1 à 11, **caractérisée en ce que** les particules minérales ignifugeantes (CMP) sont essentiellement constituées par des alumines hydratées.

13. Composition selon l'une des revendications 1 à 12, **caractérisée en ce que** les particules minérales ignifugeantes (CMP) ont des formes différentes.

14. Composition selon l'une des revendications 1 à 13, **caractérisée en ce que** la matrice organique comporte un additif thermoplastique (TPS).

15. Procédé de production de 100 parties en poids d'une composition pour moulage par injection comprenant :
- la préparation d'au moins une partie (MO1) d'une matrice organique (MO), par mélange de composés comportant une résine thermodurcissable (TDG),
- l'ajout et le mélange de fibres renfort (RF), et
- l'ajout et le mélange de particules solides comportant des particules minérales ignifugeantes (CMP).
**caractérisé en ce que** la quantité de fibres de renfort ajoutées et mélangées est comprise entre 5 et 15 parties en poids de ladite composition, **en ce qu'**une portion des particules solides ajoutées et mélangées comporte au moins 5 parties en poids de billes (CMSE), et **en ce qu'**au moins 50 % en poids des particules minérales ignifugeantes (CMP) présentent une distribution des diamètres équivalents comprenant au moins deux modes.

16. Procédé selon la revendication 15, **caractérisé en ce que** l'ajout et le mélange des billes (CMSE) et des fibres de renfort (RF) sont réalisés sensiblement en même temps.

17. Procédé selon l'une des revendications 15 à 16, **caractérisé en ce qu'**une autre partie de la matrice organique (MO) comportant un agent d'ensimage (AES) est ajoutée sensiblement conjointement aux particules minérales ignifugeantes (CMP).

18. Procédé selon l'une des revendications 15 à 17, **caractérisé en ce que** l'ajout et le mélange des billes (CMSE) sont réalisés en maintenant la température de la composition à une valeur sensiblement constante.

19. Pièce obtenue par moulage par injection d'une composition, **caractérisée en ce que** ladite composition est une composition composite selon l'une des revendications 1 à 14, la forme de la pièce étant définie par la forme du moule dans lequel ladite composition est injectée.

## Claims

1. A composite composition for injection moulding comprising:
- from 15 to 50% weight of an organic matrix (MO) comprising a thermosetting resin (TDG),
- reinforcing fibers (RF), and
- solid particles (CMP, CMSE) comprising fire-resistant mineral particles (CMP),
**characterized in that** the quantity of reinforcing fibers is comprised between 5 and 15 % weight of said composition, that at least a portion of the solid particles greater than 5 % weight of said composition comprises beads (CMSE), and that at least 50% weight of the fire-resistant mineral particles (CMP) present a distribution of the equivalent diameters comprising at least two modes.

2. The composition according to claim 1, **characterized in that** the beads (CMSE) have a form factor of less than 2.

3. The composition according to claim 2, **characterized in that** the beads (CMSE) have a substantially spherical shape.

4. The composition according to one of claims 1 to 3, **characterized in that** the beads (CMSE) are made of glass.

5. The composition according to one of claims 1 to 4, **characterized in that** a reinforcing fiber comprises a plurality of filaments.

6. The composition according to claim 5, **characterized in that** the beads (CMSE) have a diameter comprised between 0.3 and 5 times the mean diameter of the filaments.

7. The composition according to one of claims 5 or 6, **characterized in that** at least 90% weight of the solid particles (CMP, CMSE) present an equivalent diameter comprised between 0.05 and 5 times the mean diameter of the filaments of the reinforcing fibers.

8. The composition according to claim 7, **characterized in that** the granulometric cross-section (d50) corresponding to separation of 50% weight of the solid particles (CMP, CMSE) is comprised between 0.2 and 20 times the mean diameter of the filaments of the reinforcing fibers.

9. The composition according to one of claims 7 or 8, **characterized in that** at least 50% weight of the solid particles (CMP, CMSE) present a distribution of the equivalent diameters comprising at least three modes.

10. The composition according to one of claims 5 or 6, **characterized in that** at least 90% weight of the fire-resistant mineral particles (CMP) present a mean equivalent diameter comprised between 0.05 and 5 times the mean diameter of the filaments of the reinforcing fibers.

11. The composition according to claim 8, **characterized in that** the granulometric cross-section (d50) corresponding to separation of 50% weight of the fire-resistant mineral particles (CMP) is comprised between 0.1 and 2.0 times the mean diameter of the filaments of the reinforcing fibers.

12. The composition according to one of claims 1 to 11, **characterized in that** the fire-resistant mineral particles (CMP) are essentially formed by hydrated aluminas.

13. The composition according to one of claims 1 to 12, **characterized in that** the fire-resistant mineral particles (CMP) have different shapes.

14. The composition according to one of claims 1 to 13, **characterized in that** the organic matrix comprises a thermoplastic additive (TPS).

15. A method for production of 100 parts weight of a composition by injection moulding comprising:
- preparation of at least a part (MO1) of an organic matrix (MO), by mixing compounds comprising a thermosetting resin (TDG),
- adding and mixing reinforcing fibers (RF), and
- adding and mixing solid particles comprising fire-resistant mineral particles (CMP),
**characterized in that** the quantity of added and mixed reinforcing fibers is comprised between 5 and 15 parts weight of said composition, that a portion of the added and mixed solid particles comprises at least 5 parts weight of beads (CMSE), and that at least 50% weight of the fire-resistant mineral particles (CMP) present a distribution of the equivalent diameters comprising at least two modes.

16. The method according to claim 15, **characterized in that** adding and mixing of the beads (CMSE) and of the reinforcing fibers (RF) are performed substantially at the same time.

17. The method according to one of claims 15 to 16, **characterized in that** another part of the organic matrix (MO) comprising a coupling size agent (AES) is added substantially together with the fire-resistant mineral particles (CMP).

18. The method according to one of claims 15 to 17, **characterized in that** adding and mixing of the beads (CMSE) are performed keeping the temperature of the composition at a substantially constant value.

19. A part obtained by injection moulding of a composition, **characterized in that** said composition is a composite composition according to one of claims 1 to 14, the shape of the part being defined by the shape of the mould in which said composition is injected.

## Patentansprüche

1. Compoundzusammensetzung für Spritzgussteile, bestehend aus:
- 15 bis 50 Gewichtsprozent einer organischen Matrix (MO) mit einem warmaushärtenden Harz (TDG),
- Verstärkungsfasern (RF) und
- Feststoffpartikel (CMP, CMSE) mit feuerfesten Mineralpartikeln (CMP),
**dadurch gekennzeichnet, dass** der Anteil der Verstärkungsfasern zwischen 5 und 15 Gewichtsprozent der genannten Zusammensetzung beträgt und dass mindestens ein Anteil der Feststoffpartikel von mehr als 5 Gewichtsprozent der genannten Zusammensetzung Rundpartikel (CMSE) umfasst und dass mindestens 50 Gewichtsprozent der feuerfesten Mineralpartikel (CMP) eine Äquivalentdurchmesserverteilung mit mindestens zwei Moden aufweist.

2. Zusammensetzung nach Anspruch 1, **dadurch gekennzeichnet, dass** die Rundpartikel (CMSE) einen Formfaktor von unter 2 aufweisen.

3. Zusammensetzung nach Anspruch 2, **dadurch gekennzeichnet, dass** die Rundpartikel (CMSE) eine annähernd kugelige Form aufweisen.

4. Zusammensetzung nach irgendeinem der Ansprüche 1 bis 3, **dadurch gekennzeichnet, dass** die Rundpartikel (CMSE) aus Glas bestehen.

5. Zusammensetzung nach irgendeinem der Ansprüche 1 bis 4, **dadurch gekennzeichnet, dass** eine Verstärkungsfaser aus mehreren Fäden besteht.

6. Zusammensetzung nach Anspruch 5, **dadurch gekennzeichnet, dass** die Rundpartikel (CMSE) einen Durchmesser zwischen dem 0,3- und dem 5-fachen Wert des mittleren Durchmessers der Fäden aufweisen.

7. Zusammensetzung nach irgendeinem der Ansprüche 5 oder 6, **dadurch gekennzeichnet, dass** mindestens 90 Gewichtsprozent der Feststoffpartikel (CMP, CMSE) einen Äquivalentdurchmesser zwischen dem 0,05- und dem 5-fachen Wert des mittleren Durchmessers der Verstärkungsfasern aufweisen.

8. Zusammensetzung nach Anspruch 7, **dadurch gekennzeichnet, dass** der Korngrößenschnitt (d50) entsprechend einer Trennung von 50 Gewichtsprozent der Feststoffpartikel (CMP, CMSE) zwischen dem 0,2- und dem 2-fachen Wert des mittleren Durchmessers der Fäden der Verstärkungsfasern beträgt.

9. Zusammensetzung nach einem der Ansprüche 7 oder 8, **dadurch gekennzeichnet, dass** mindestens 50 Gewichtsprozent der Feststoffpartikel (CMP, CMSE) eine Äquivalentdurchmesserverteilung mit mindestens drei Moden aufweist.

10. Zusammensetzung nach einem der Ansprüche 5 oder 6, **dadurch gekennzeichnet, dass** mindestens 90 Gewichtsprozent der feuerfesten Mineralpartikel (CMP) einen mittleren Äquivalentdurchmesser zwischen dem 0,05- und dem 5-fachen Wert des mittleren Durchmessers der Fäden der Verstärkungsfasern aufweisen.

11. Zusammensetzung nach Anspruch 8, **dadurch gekennzeichnet, dass** der Korngrößenschnitt (d50) entsprechend einer Trennung von 50 Gewichtsprozent der feuerfesten Mineralpartikel (CMP) zwischen dem 0,1- und dem 2-fachen Wert des mittleren Durchmessers der Fäden der Verstärkungsfasern beträgt.

12. Zusammensetzung nach einem der Ansprüche 1 bis 11, **dadurch gekennzeichnet, dass** die feuerfesten Mineralpartikel (CMP) im Wesentlichen aus hydrierten Aluminiumoxyden bestehen.

13. Zusammensetzung nach einem der Ansprüche 1 bis 12, **dadurch gekennzeichnet, dass** die feuerfesten Mineralpartikel (CMP) unterschiedliche Formen aufweisen.

14. Zusammensetzung nach irgendeinem der Ansprüche 1 bis 13, **dadurch gekennzeichnet, dass** die organische Matrix einen Thermoplastzusatz (TPS) enthält.

15. Verfahren zur Herstellung von 100 Gewichtsanteilen einer Zusammensetzung für Spritzgussteile, das
- die Vorbereitung mindestens eines Teils (MO1) einer organischen Matrix (MO) durch Mischung von Verbindungen mit einem warmaushärtenden Harz (TDG),
- den Zusatz und die Mischung von Verstärkungsfasern (RF) sowie
- den Zusatz und die Mischung von Feststoffpartikeln mit feuerfesten Mineralpartikeln (CMP) umfasst,
**dadurch gekennzeichnet, dass** die Menge der zugesetzten und gemischten Verstärkungsfasern zwischen 5 und 15 Gewichtsprozent der genannten Zusammensetzung beträgt und dass ein Anteil der zugesetzten und gemischten Feststoffpartikel mindestens 5 Gewichtsanteile Rundpartikel (CMSE) umfasst und dass mindestens 50 Gewichtsprozent der feuerfesten Mineralpartikel (CMP) eine Äquivalentdurchmesserverteilung mit mindestens zwei Moden aufweist.

16. Verfahren nach Anspruch 15, **dadurch gekennzeichnet, dass** das Zusetzen und Mischen der Rundpartikel (CMSE) und der Verstärkungsfasern (RF) annähernd gleichzeitig erfolgen.

17. Verfahren nach einem der Ansprüche 15 bis 16, **dadurch gekennzeichnet, dass** ein anderer, eine Schlichte (AIES) umfassender Teil der organischen Matrix (MO) annähernd gleichzeitig mit den feuerfesten Mineralpartikeln (CMP) zugesetzt wird.

18. Verfahren nach einem der Ansprüche 15 bis 17, **dadurch gekennzeichnet, dass** das Zusetzen und Mischen der Rundpartikel (CMSE) unter Halten der Mischungstemperatur auf einem annähernd konstanten Wert erfolgen.

19. Aus einer Zusammensetzung hergestelltes Spritzgussteil **dadurch gekennzeichnet, dass** die genannte Zusammensetzung eine Compoundzusammensetzung nach einem der Ansprüche 1 bis 14 ist, wobei sich die Form des Teils aus der Form des Spritzgießwerkzeugs ergibt, in das die Compoundzusammensetzung eingespritzt wird.
